# EUROPEAN PATENT APPLICATION

(11) **EP 4 131 698 A1**
(43) Date of publication of application: **08.02.2023**
(21) Application number: 22180181.4
(22) Date of filing: 21.06.2022
(51) Int. Cl.: H02J 3/00, H02J 13/00

(54) **POWER MANAGEMENT SYSTEM, POWER MANAGEMENT SERVER, AND POWER MANAGEMENT METHOD**

(30) Priority: 04.08.2021 JP 2021128340
(71) Applicant: TOYOTA JIDOSHA KABUSHIKI KAISHA, Toyota-shi, Aichi-ken, 471-8571 (JP)
(72) Inventor: OZAWA, Tamaki, Toyota-shi, 471-8571 (JP); NAKAMURA, Tohru, Toyota-shi, 471-8571 (JP); MORISHIMA, Akinori, Toyota-shi, 471-8571 (JP); HORII, Yusuke, Toyota-shi, 471-8571 (JP); MATSUMURA, Wataru, Toyota-shi, 471-8571 (JP)
(74) Representative: D Young & Co LLP

(57) **Abstract**

A power management system (100) includes a photovoltaic power generation device (15A) installed in a predetermined area (102) and connected to a power grid (4) disposed in the predetermined area (102), an acquisition device (116) configured to acquire a wind direction at a reference point at which the photovoltaic power generation device (15A) is installed in the predetermined area (102), and an arithmetic device (2) configured to calculate a predicted value of a solar radiation amount at the reference point at a prediction target time and calculate generated power of the photovoltaic power generation device (15A) by using the predicted value.

## Description

### BACKGROUND OF THE INVENTION

### 1. Field of the Invention

The present disclosure relates to a power management system, power management server, and a power management method which mange power generated by a photovoltaic power generation device.

### 2. Description of Related Art

Examples of power adjustment resources of a power grid, such as a microgrid include a generator, a naturally fluctuating power source, a power storage system, an electric vehicle supply equipment, and a vehicle equipped with a power source. Among the power adjustment resources, a photovoltaic power generation device, such as a solar panel is listed as a naturally fluctuating power source. When the photovoltaic power generation device is installed in an area targeted by a microgrid, to execute power adjustment with high precision, it is requested to predict the generated power by using the photovoltaic power generation device with high precision.

For example, Japanese Unexamined Patent Application Publication No. 2011-124287 discloses a technique of predicting a solar radiation amount and calculating the generated power of the photovoltaic power generation device from the information on the predicted solar radiation amount.

### SUMMARY OF THE INVENTION

The above-mentioned prediction information of the solar radiation amount is provided by various organizations, such as the Meteorological Agency on an areal basis, but the solar radiation amount may fluctuate more than the predicted value depending on the amount of clouds, a wind direction, and the like in the area to be predicted (hereinafter referred to as a prediction target area) at the time to be predicted (hereinafter referred to as a prediction target time). Therefore, when the solar radiation amount fluctuates significantly from the predicted value, the prediction precision of the generated power by using the photovoltaic power generation device also deteriorates, and it may become difficult to use the power adjustment resource.

The present disclosure provides a power management system, a power management server, and a power management method that improve the prediction precision of the generated power of a photovoltaic power generation device.

A power management system according to a first aspect of the present disclosure is a power management system that manages power of a power grid installed in a predetermined area. The power management system includes a photovoltaic power generation device installed in a predetermined area and connected to a power grid disposed in the predetermined area, an acquisition device configured to acquire a wind direction at a reference point at which the photovoltaic power generation device is installed in the predetermined area, and an arithmetic device configured to calculate a predicted value of a solar radiation amount at the reference point at a prediction target time and calculate generated power of the photovoltaic power generation device by using the predicted value. The arithmetic device corrects a predicted value of a solar radiation amount at the reference point at the prediction target time by weighting first information about a solar radiation amount at a point on a windward side of the reference point before a current time larger than second information about a solar radiation amount at another point other than the reference point before the current time.

According to the first aspect of the present disclosure, when the solar radiation amount fluctuates from the initially predicted value due to the influence of clouds and the like, the predicted value of the solar radiation amount in the photovoltaic power generation device at the prediction target time can be corrected with high precision by weighting the first information about the solar radiation amount at the point on the windward larger than the second information about the solar radiation amount at another point. Therefore, it is possible to improve the prediction precision of the generated power of the photovoltaic power generation device.

In the first aspect of the present disclosure, the arithmetic device may calculate a first correction amount by using a measured value and the predicted value of the solar radiation amount at the point on the windward side. The arithmetic device may calculate a second correction amount by using a measured value and a predicted value of the solar radiation amount at the other point. The arithmetic device may be configured to calculate a correction amount to correct the predicted value of the solar radiation amount at the reference point at the prediction target time by setting a weighting coefficient of the first correction amount to be larger than the second correction amount.

According to the first aspect of the present disclosure, since the predicted value of the solar radiation amount at the reference point at the prediction target time can be corrected with high precision, the prediction precision of the generated power of the photovoltaic power generation device can be improved.

In the first aspect of the present disclosure, the measured value of the solar radiation amount may be acquired by using at least any one of a pyranometer, a camera, a raindrop sensor, and a temperature sensor.

According to the first aspect of the present disclosure, the measured value can be acquired with high precision, and the predicted value of the solar radiation amount in the photovoltaic power generation device at the prediction target time can be calculated with high precision by using the acquired measured value.

In the first aspect of the present disclosure, the predicted value of the solar radiation amount may be calculated by using a history of the measured value.

According to the first aspect of the present disclosure, it is possible to calculate the predicted value of the solar radiation amount in the photovoltaic power generation device at the prediction target time with high precision.

In the first aspect of the present disclosure, the arithmetic device may be configured to acquire at least any one of the measured value and the predicted value from an external server of the power management system.

According to the first aspect of the present disclosure, it is possible to calculate the predicted value of the solar radiation amount in the photovoltaic power generation device at the prediction target time with high precision by using the measured value and the predicted value acquired from an external server.

In the first aspect of the present disclosure, the other point other than the reference point may include a point on a leeward side of the reference point.

A power management server according to a second aspect of the present disclosure is a power management server that manages power of a power grid installed in a predetermined area. A photovoltaic power generation device connected to a power grid disposed in a predetermined area is installed in the predetermined area. The power management server acquires a wind direction at a reference point at which the photovoltaic power generation device is installed in the predetermined area, calculates a predicted value of a solar radiation amount at the reference point at a prediction target time, and calculates a generated power of the photovoltaic power generation device by using the predicted value. The power management server includes one or more processors configured to correct the predicted value of the solar radiation amount at the reference point at the prediction target time by weighting first information about a solar radiation amount at a point on a windward side of the reference point before a current time larger than second information about a solar radiation amount at another point other than the reference point before the current time.

In the second aspect of the present disclosure, the one or more processors may calculate a first coefficient corresponding to the first information by using a predicted value and a measured value of the solar radiation amount at the point on the windward side, may calculate a second coefficient by using the predicted value and a measured value of the solar radiation amount at the reference point, and may calculate a third coefficient corresponding to the second information by using a predicted value and a measured value of the solar radiation amount at the other point of the reference point. The one or more processors may calculate a correction coefficient by using the first coefficient, the second coefficient, and the third coefficient, and may be configured to correct the predicted value of the solar radiation amount at the reference point at the prediction target time by using the correction coefficient. The one or more processors may set weighting for the first coefficient to be larger than weighting for the second coefficient and the third coefficient.

A power management method according to a third aspect of the present disclosure is a power management method that manages power of a power grid installed in a predetermined area. A photovoltaic power generation device connected to a power grid is installed in the predetermined area. The power management method includes acquiring a wind direction at a reference point at which the photovoltaic power generation device is installed in the predetermined area, calculating a predicted value of a solar radiation amount at the reference point at a prediction target time and calculating a generated power of the photovoltaic power generation device by using the predicted value, and correcting the predicted value of the solar radiation amount at the reference point at the prediction target time by weighting first information about a solar radiation amount at a point on a windward side of the reference point before a current time larger than second information about a solar radiation amount at another point other than the reference point before the current time.

According to the aspect of the present disclosure, it is possible to provide the power management system, the power management server, and the power management method that improve the prediction precision of the generated power of the photovoltaic power generation device.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing a schematic configuration of a power management system according to the present embodiment;
FIG. 2 is a diagram for describing an example of a configuration that predicts a solar radiation amount in a prediction target area;
FIG. 3 is a flowchart showing an example of processing executed by a CEMS server;
FIG. 4 is a diagram showing an example of a plurality of points set in a plurality of directions centered on a reference point;
FIG. 5 is a diagram showing a measured value and a predicted value of the solar radiation amount, and a direction at the same time at the reference point and each of the points in a table format;
FIG. 6 is a diagram showing an example of a relationship among the predicted value, the measured value, and a coefficient at each of a point on a windward side, a reference point in the prediction target area, and a point on a leeward side at a current time; and
FIG. 7 is a diagram showing an example of a relationship between the predicted value at the reference point of a prediction target area at a prediction target time, and the predicted value after correction.

### DETAILED DESCRIPTION OF EMBODIMENTS

Hereinafter, embodiments of the present disclosure will be described in detail with reference to the drawings. The same or corresponding parts in the drawings are designated by the same reference numerals, and the description thereof will not be repeated.

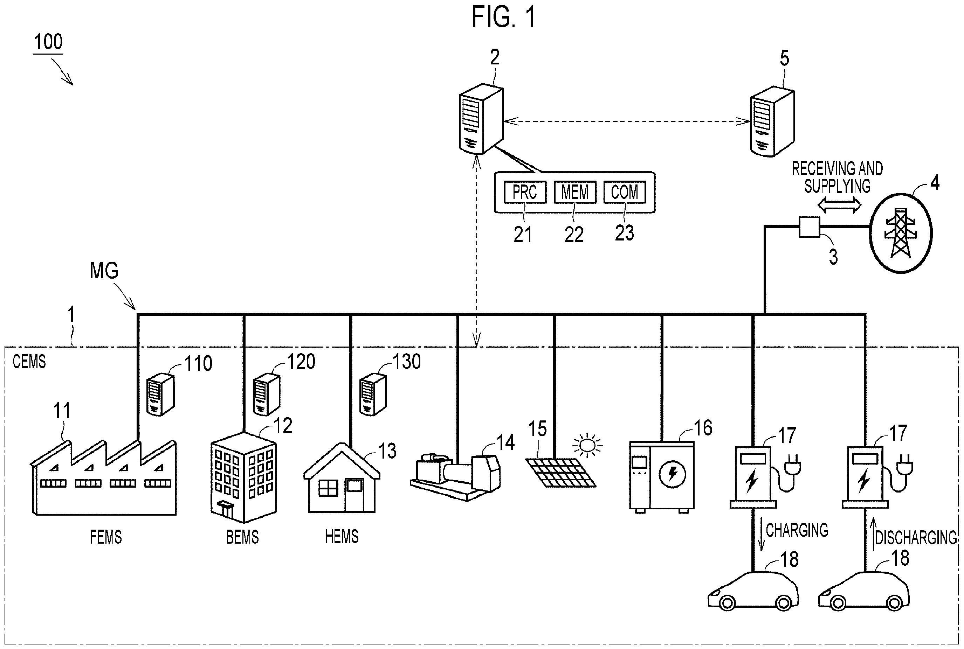

FIG. 1 is a diagram showing a schematic configuration of a power management system according to the present embodiment. A power management system 100 includes, for example, a CEMS 1, a CEMS server 2, power receiving and transforming equipment 3, a power system 4, and a power transmission and distribution business operator server 5. The CEMS means a community energy management system or a city energy management system.

The CEMS 1 includes a factory energy management system (FEMS) 11, a building energy management system (BEMS) 12, a home energy management system (HEMS) 13, and a generator 14, a naturally fluctuating power source 15, a power storage system (energy storage system: ESS) 16, electric vehicle supply equipment (EVSE) 17, and a vehicle 18. In the CEMS 1, a microgrid MG is constructed by the components described above. The microgrid MG is an example of the "power grid" according to the present disclosure.

The FEMS 11 is a system that manages the supply and demand of power used in a factory. The FEMS 11 includes a factory building (including a lighting fixture, air conditioning equipment, and the like), industrial equipment (production line and the like), and the like operated by power supplied from the microgrid MG Although not shown, the FEMS 11 may include power generation equipment (a generator, and the like) installed in the factory. The power generated by the power generation equipment may be supplied to the microgrid MG The FEMS 11 further includes a FEMS server 110 capable of bidirectional communication with the CEMS server 2.

The BEMS 12 is a system that manages the supply and demand of power used in a building, such as an office or a commercial facility. The BEMS 12 includes a lighting fixture and air conditioning equipment installed in the building. The BEMS 12 may include the power generation equipment or may include a cold heat source system (a waste heat recovery system, a heat storage system, and the like). The BEMS 12 further includes a BEMS server 120 capable of bidirectional communication with the CEMS server 2.

The HEMS 13 is a system that manages the supply and demand of power used at home. The HEMS 13 includes a household apparatus (a lighting apparatus, an air conditioner, other electric appliances, and the like) operated by power supplied from the microgrid MG Further, the HEMS 13 may include a household heat pump system, a household cogeneration system, a household storage battery, and the like. The HEMS 13 further includes a HEMS server 130 capable of bidirectional communication with the CEMS server 2.

The generator 14 is power generation equipment that does not depend on weather conditions, and outputs the generated power to the microgrid MG The generator 14 may include a steam turbine generator, a gas turbine generator, a diesel engine generator, a gas engine generator, a biomass generator, a stationary fuel cell, and the like. The generator 14 may include a cogeneration system that utilizes the heat generated during power generation.

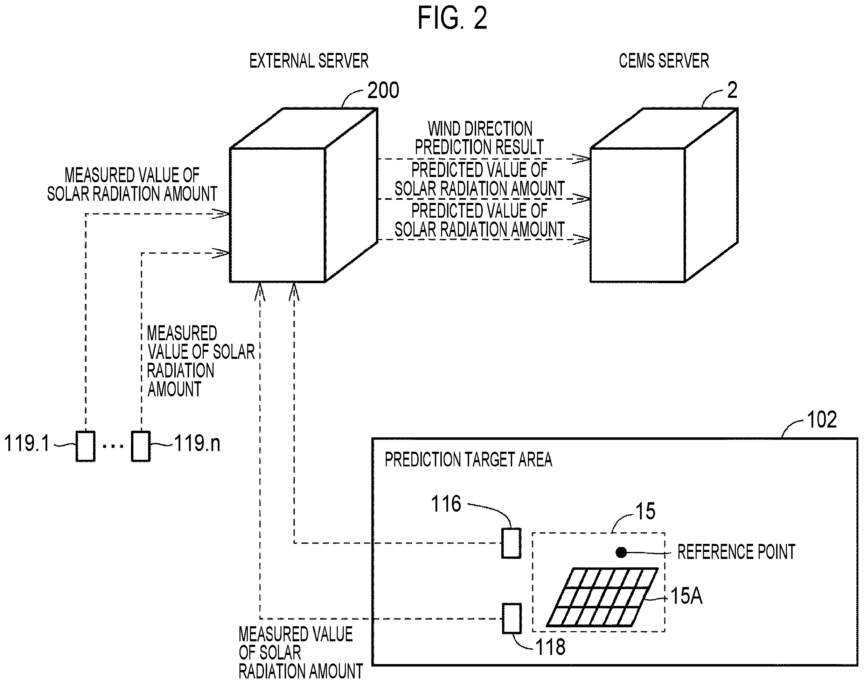

The naturally fluctuating power source 15 is power generation equipment with a power generation output fluctuating depending on the weather conditions, and outputs the generated power to the microgrid MG Although FIG. 1 illustrates a photovoltaic power generation device 15A (FIG. 2), such as a solar panel, the naturally fluctuating power source 15 may include a wind power generation device in addition to the photovoltaic power generation device 15A.

The power storage system 16 is a stationary power source that stores power generated by a naturally fluctuating power source 15 and the like. The power storage system 16 is a secondary battery, for example, a lithium ion battery or a nickel hydrogen battery of a battery (a recycled product) used in a vehicle. However, the power storage system 16 is not limited to the secondary battery, and may be a power-to-gas apparatus that produces gaseous fuel (hydrogen, methane, and the like) by using surplus power.

The electric vehicle supply equipment 17 is electrically connected to the microgrid MG, and is configured to be capable of charging and discharging (power supply) with the microgrid MG

Specifically, the vehicle 18 is a plug-in hybrid electric vehicle (PHV), an electric vehicle (EV), and the like. The vehicle 18 is configured to be capable of one or both of external charging and external power supply. That is, the vehicle 18 is configured to be capable of supplying power from the microgrid MG to the vehicle 18 (external charging) when a charging cable is connected to an inlet (not shown) of the vehicle 18. Further, the vehicle 18 may be configured to be capable of supplying power from the vehicle 18 to the microgrid MG (external power supply) when the charging cable is connected to an outlet (not shown) of the vehicle 18.

In the example shown in FIG. 1, the number of the FEMS 11, the BEMS 12, the HEMS 13, the generator 14, the naturally fluctuating power source 15, and the power storage system 16 included in the CEMS 1 is one, but the included number of the system or equipment may be optional. The CEMS 1 may include a plurality of the systems or equipment, or may include systems or equipment not included in the CEMS 1. Since each of the FEMS 11 (factory building, industrial equipment, and the like), the BEMS 12 (a lighting fixture, air conditioning equipment, and the like), the HEMS 13 (a household apparatus, and the like), the generator 14, the naturally fluctuating power source 15, the power storage system 16, the electric vehicle supply equipment 17, and the vehicle 18 included in the CEMS 1 is an example of a "power adjustment resource" according to the present disclosure, the system or equipment is also referred to as the "power adjustment resource" below unless otherwise specified.

The CEMS server 2 is a computer that manages the power adjustment resource in the CEMS 1. The CEMS server 2 includes a control device 21, a storage device 22, and a communication device 23. The control device 21 includes a processor and is configured to execute a predetermined arithmetic processing. The storage device 22 includes a memory that stores a program executed by the control device 21, and stores various information (a map, a relational expression, a parameter, and the like) used in the program. The communication device 23 includes a communication interface and is configured to communicate with an external device (another server and the like).

The CEMS server 2 may be an aggregator server. An aggregator is an electricity business operator that bundles a plurality of power adjustment resources to provide energy management services. The CEMS server 2 is an example of a "power management server" according to the present disclosure.

The power receiving and transforming equipment 3 is provided at an interconnection point (a power receiving point) of the microgrid MG, and is configured to be capable of switching parallel (connection) and parallel-off (disconnection) between the microgrid MG and the power system 4. Although not shown, the power receiving and transforming equipment 3 includes a switchgear on a high voltage side (a primary side), a transformer, a protection relay, a measuring apparatus, and a control device. When the microgrid MG is connected to the power system 4, the power receiving and transforming equipment 3 receives alternating current power of, for example, a special high voltage (a voltage exceeding 7000 V) from the power system 4 and steps down the received power to supply the power to the microgrid MG

The power system 4 is a power grid constructed by a power plant and power transmission and distribution equipment. In the embodiment, the power company serves as both a power generation business operator and a power transmission and distribution business operator. The power company is an example of a general power transmission and distribution business operator and an example of an administrator of the power system 4, and maintains and manages the power system 4.

The power transmission and distribution business operator server 5 is a computer that belongs to the power company and manages the power supply and demand of the power system 4. The power transmission and distribution business operator server 5 is also configured to allow bidirectional communication with the CEMS server 2.

As described above, in the power management system 100 having the above configuration, as the naturally fluctuating power source 15 used as the power adjustment resource of the microgrid MG, the photovoltaic power generation device 15A, such as a solar panel is listed. When the photovoltaic power generation device 15A device is installed in a predetermined area targeted by the microgrid MG, to execute power adjustment with high precision, it is requested to predict the generated power by using the photovoltaic power generation device 15A with high precision. Therefore, for example, it is conceivable to predict a solar radiation amount and calculate the amount of generated power of the photovoltaic power generation device 15A from the information on the predicted solar radiation amount.

FIG. 2 is a diagram for describing an example of a configuration that predicts the solar radiation amount in a prediction target area 102. The prediction target area 102 is an area including a point at which the photovoltaic power generation device 15A included in the naturally fluctuating power source 15 is installed, and may be, for example, a municipal unit, or may be an area of a circle or a rectangle centered on a reference point. In FIG. 2, for example, the case where the prediction target area 102 is an area of a rectangle centered on a reference point will be described as an example. The reference point is the position in which the photovoltaic power generation device 15A is installed. The reference point and the installation point of the photovoltaic power generation device 15A are not limited to the same point, but at least at different points within the range in which the difference between the predicted values of the solar radiation amount is equal to or less than the threshold value may be possible.

As shown in FIG. 2, the CEMS server 2 acquires, for example, the information indicating a measured value of the solar radiation amount at a reference point set in the prediction target area 102, the information indicating and a predicted value of the solar radiation amount at a time point after the current time, and the information indicating a wind direction predicted at a time point after the current time at the reference point, from an external server 200. The external server 200 includes, for example, a server of the Meteorological Agency, a server of an organization that provides information on the solar radiation amount to the outside, and the like.

A wind direction meter 116 and a pyranometer 118 are installed at the reference point of the prediction target area 102. The wind direction meter 116 detects the wind direction and transmits information indicating the detection result to the external server 200. The pyranometer 118 detects the solar radiation amount and transmits information indicating the detection result to the external server 200. Further, at a plurality of points set around the prediction target area 102, pyranometers 119.1 to 119.n are installed. Each of the pyranometers 119.1 to 119.n detects the solar radiation amount and transmits information indicating the detection result to the external server 200.

The external server 200 predicts, for example, the wind direction at a time point after the current time at the reference point based on the measured value of the wind direction meter 116 provided at the reference point, a pressure distribution, and the change prediction of the pressure distribution. The external server 200 calculates the predicted value of the solar radiation amount at a time point after the current time by using the history of the measured value of the solar radiation amount acquired from the pyranometers 118, 119.1 to 119.n. As the prediction method, a technique in related art may be used, and the detailed description thereof will not be given. The external server 200 associates the measured value with the predicted value of the solar radiation amount at the same time at each point and stores the values in a storage device (not shown). The external server 200 transmits the information on the measured value and the predicted value of the solar radiation amount to the CEMS server 2 in response to the request from the CEMS server 2 for the information on the solar radiation amount in the prediction target area 102.

The CEMS server 2 can calculate the generated power of the photovoltaic power generation device 15A in the prediction target area 102 at the prediction target time by using the predicted value of the solar radiation amount. The prediction target time may be, for example, a time after a predetermined time (for example, 30 minutes or 1 hour) has elapsed from the current time, or may be a time at which power adjustment is executed.

The above-mentioned prediction information of the solar radiation amount is provided from the external server 200 on an areal basis, but there may be a case where the solar radiation amount fluctuates more than the predicted value due to the amount of clouds, the wind direction, and the like in the prediction target area 102 at the prediction target time. Therefore, when the solar radiation amount fluctuates significantly from the predicted value, the prediction precision of the generated power by using the photovoltaic power generation device 15A also deteriorates, and it may become difficult to use the power adjustment resource.

Therefore, in the present embodiment, the CEMS server 2, which is an example of the "arithmetic device" in the power management system 100, corrects the predicted value of the solar radiation amount at the reference point at the prediction target time by weighting the first information about the solar radiation amount at the point on the windward side of the reference point before the current time larger than the second information about the solar radiation amount at another point before the current time.

In this way, when the solar radiation amount fluctuates from the initially predicted value due to the influence of clouds and the like, the predicted value of the solar radiation amount in the photovoltaic power generation device 15A at the prediction target time can be corrected with high precision by weighting the first information about the solar radiation amount at the point on the windward side larger than the second information about the solar radiation amount at another point. Therefore, it is possible to improve the prediction precision of the generated power of the photovoltaic power generation device 15A.

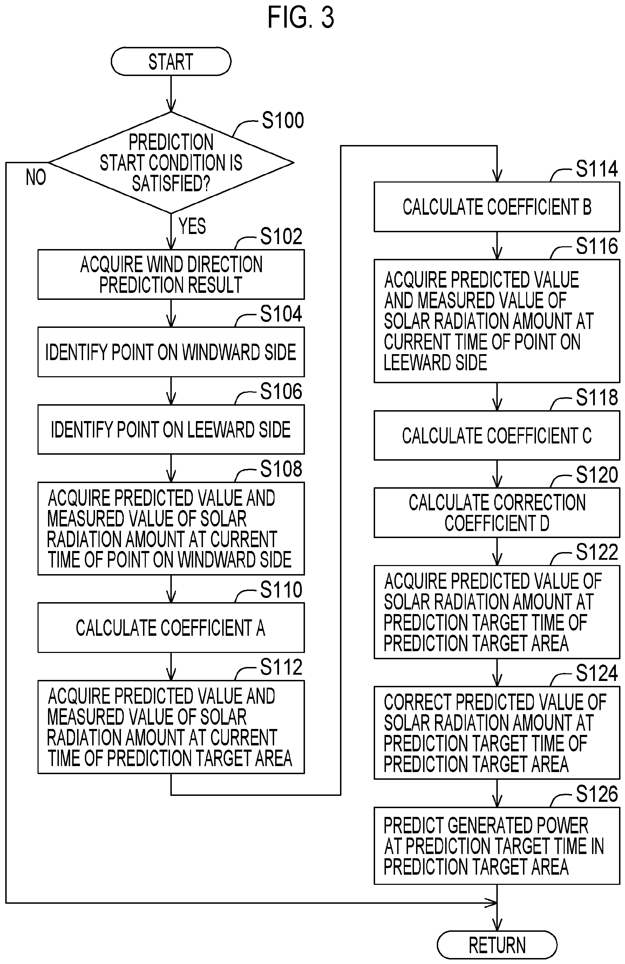

Hereinafter, an example of the processing executed by the CEMS server 2 will be described with reference to FIG. 3. FIG 3 is a flowchart showing an example of processing executed by the CEMS server 2. The series of processes shown in the flowchart are repeatedly executed at predetermined cycles.

At step (hereinafter, step is referred to as S) 100, the CEMS server 2 determines whether a prediction start condition is satisfied. The prediction start condition includes, for example, a condition that the prediction of the generated power at the prediction target time is requested for the photovoltaic power generation device 15A. For example, when power adjustment by using the generated power (for example, power supply to the power system 4) is requested at the prediction target time from the power transmission and distribution business operator server 5, the CEMS server 2 determines that the condition that the prediction of the generated power at the prediction target time is requested is satisfied. When the CEMS server 2 determines that the prediction start condition is satisfied (YES in S100), the processing is transferred to S102.

In S102, the CEMS server 2 acquires the wind direction prediction result. The CEMS server 2 acquires, for example, information about the wind direction at the reference point predicted at the prediction target time from the external server 200 as the wind direction prediction result.

In S104, the CEMS server 2 identifies the point on the windward side. The point in the windward direction of the reference point is identified as the point on the windward side.

For example, the CEMS server 2 sets one or more points in advance in each of a plurality of directions centered on the reference point, and identifies the point in the direction corresponding to the windward side as the point on the windward side with respect to the wind direction obtained from the wind direction prediction result. In the present embodiment, for example, it is assumed that a total of eight points A1 to A8 are set in each of the directions set separately in eight directions.

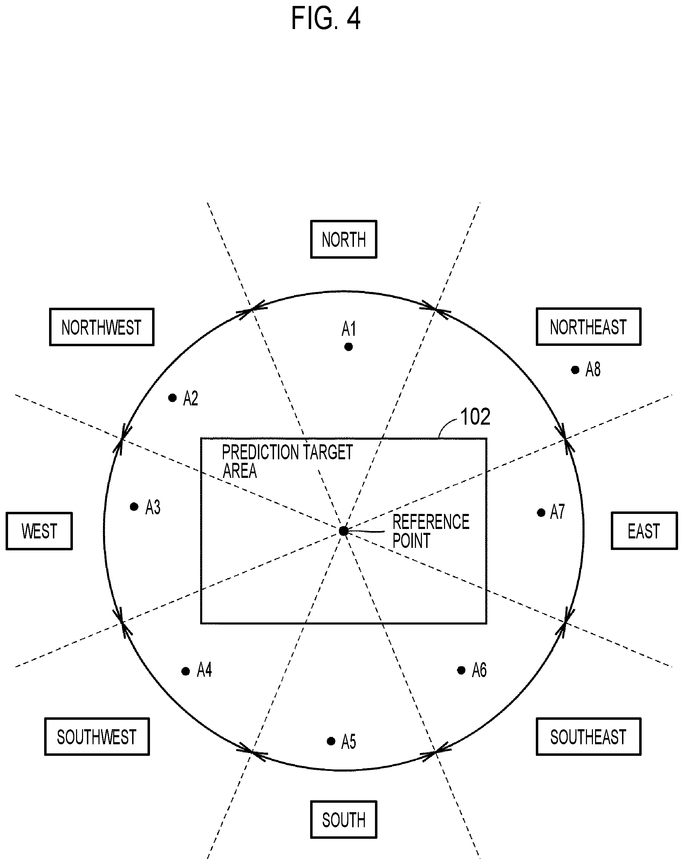

FIG. 4 shows an example of a plurality of points A1 to A8 set in a plurality of directions centered on a reference point. The points A1 to A8 are points set in advance in each of the north, northwest, west, southwest, south, southeast, east, and northeast directions centering on the reference point set in the prediction target area 102. The point set in each direction may be a point within the range set as each direction, and is not particularly limited to the positions of the points A1 to A8 shown in FIG. 4.

Pyranometers are installed at the points A1 to A8. The pyranometers 119.1 to 119.n include pyranometers installed at the points A1 to A8. That is, the measured value and the predicted value of the solar radiation amount at each point including the reference point can be acquired from the external server 200. In the CEMS server 2, each point and the measured value and the predicted value of the solar radiation amount at the same time are stored in association with each other, and each point and the predicted value of the solar radiation amount at the prediction target time after the current time is stored in association with each other. After that, when the time reaches the prediction target time, a value indicating the detection result of the solar radiation amount is acquired from the external server 200 as a measured value, and is stored in association with the predicted value at the same time stored in the CEMS server 2. The above-mentioned information is stored in a table format (described later) in the CEMS server 2, and the CEMS server 2 acquires the measured value and the predicted value of the solar radiation amount corresponding to each point from the above-mentioned information.

For example, when the wind direction at the reference point at the prediction target time is southward, the CEMS server 2 identifies the point A1 on the north side of the reference point as the point on the windward side.

At S106, the CEMS server 2 identifies the point on the leeward side. For example, when the wind direction at the prediction target time is southward, the CEMS server 2 identifies the point A5 on the south side of the reference point as the point on the leeward side.

At S108, the CEMS server 2 acquires the predicted value and the measured value of the solar radiation amount at the current time of the point on the windward side.

At S110, the CEMS server 2 calculates a coefficient A. The CEMS server 2 calculates the ratio (= measured value/predicted value) of the measured value to the predicted value of the solar radiation amount at the current time of the point on the windward side as the coefficient A.

In S112, the CEMS server 2 acquires the predicted value and the measured value of the solar radiation amount at the current time of the prediction target area 102 (the reference point).

In S114, the CEMS server 2 calculates a coefficient B. The CEMS server 2 calculates the ratio of the measured value to the predicted value of the solar radiation amount at the current time of the prediction target area 102 as the coefficient B.

In S116, the CEMS server 2 acquires the predicted value and the measured value of the solar radiation amount at the current time of the point on the leeward side.

At S118, the CEMS server 2 calculates a coefficient C. The CEMS server 2 calculates the ratio of the measured value to the predicted value of the solar radiation amount at the current time of the point on the leeward side as the coefficient C.

In S120, the CEMS server 2 calculates a correction coefficient D. The correction coefficient D is a coefficient to correct the predicted value in the prediction target area 102 (the reference point) at the prediction target time. The CEMS server 2 calculates the correction coefficient D by using the coefficient A, the coefficient B, and the coefficient C. The CEMS server 2 calculates the correction coefficient D by, for example, the weighted average of the coefficient A, the coefficient B, and the coefficient C. That is, the CEMS server 2 calculates the correction coefficient D by using, for example, the equation, D = (w1 × A + w2 × B + w3 × C)/(w1 + w2 + w3). w1, w2, w3 indicate weighting coefficients set for the coefficients A, B, C, respectively. At this time, the weighting coefficient w1 is set to a value larger than each of the weighting coefficients w2, w3 at other points. The weighting coefficients w1, w2, w3 may be predetermined values, or may be set according to date, a wind speed, and the like indicating the season and the like. For example, when the wind speed is high or when it is a month and day indicating a season when the wind is strong, the weighting coefficient w1 may be larger than when the wind speed is low.

In S122, the CEMS server 2 acquires the predicted value of the solar radiation amount at the prediction target time of the prediction target area 102. The CEMS server 2 acquires, for example, the predicted value of the solar radiation amount at the prediction target time of the prediction target area 102 from the external server 200.

In S124, the CEMS server 2 corrects the predicted value of the solar radiation amount at the prediction target time of the prediction target area 102. Specifically, the CEMS server 2 uses a value calculated by multiplying the predicted value of the solar radiation amount at the prediction target time of the prediction target area 102 acquired from the external server 200 by the correction coefficient D as the predicted value after correction.

In S126, the CEMS server 2 predicts the generated power at the prediction target time in the prediction target area 102. Specifically, the CEMS server 2 calculates the generated power at the prediction target time of the prediction target area 102 by using the predicted value of the solar radiation amount after correction and the generated power by the photovoltaic power generation device 15A per predetermined solar radiation amount.

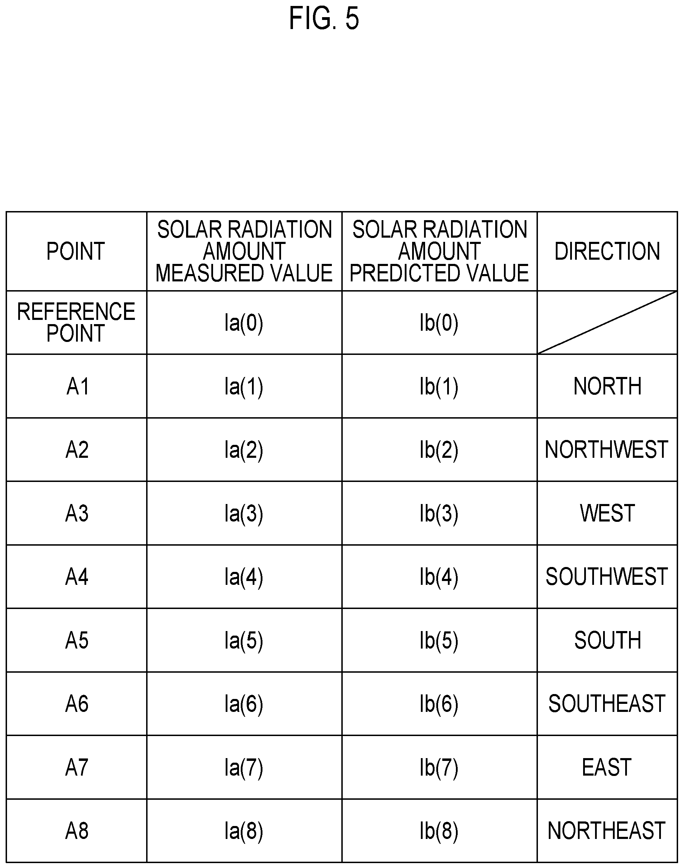

An example of the operation of the CEMS server 2 in the present embodiment based on the above structure and the flowchart will be described with reference to FIGS. 5 to 7.

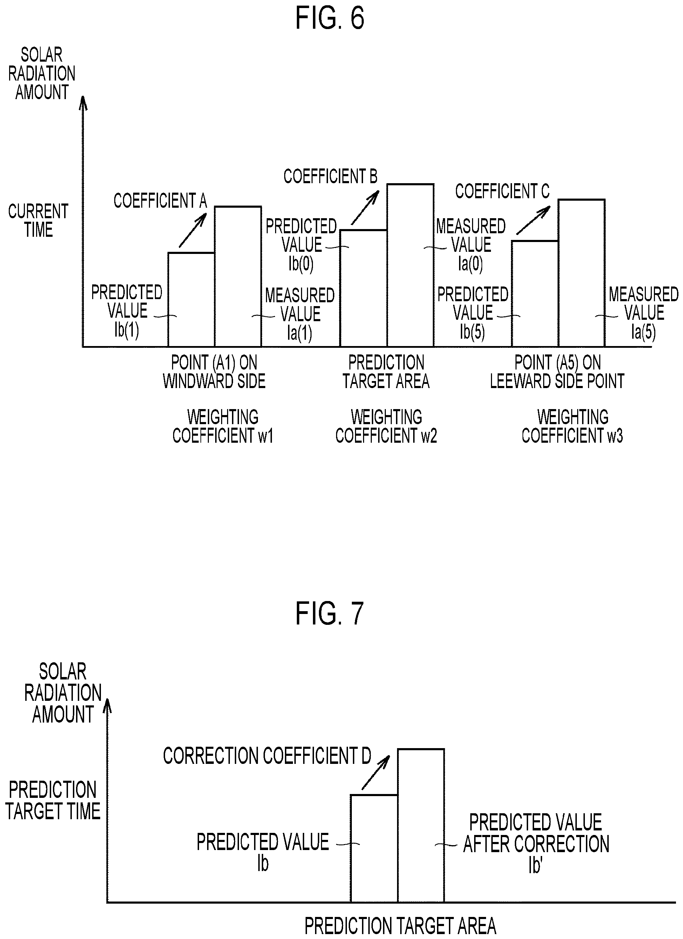

FIG. 5 is a diagram showing the measured value and the predicted value of the solar radiation amount, and a direction at the same time at the reference point and each of the points A1 to A8 in a table format. For example, the CEMS server 2 uses information from the external server 200 to store the measured value and the predicted value of the solar radiation amount at the same time at the reference point and each of the points A1 to A8 in association with each other as shown in FIG. 5. For example, when the CEMS server 2 acquires the measured value of the solar radiation amount at each point at the current time from the external server 200, the CEMS server 2 stores the measured value in association with the predicted value of the solar radiation amount at each point at the current time acquired in advance. In FIG. 5, for example, at the current time, the measured value of the solar radiation amount at the reference point is Ia(0), the predicted value of the solar radiation amount is Ib(0), the measured values of the solar radiation amounts at the points A1 to A8 are Ia(1) to Ia(8), respectively, and the predicted values of the solar radiation amounts are Ib(1) to Ib(8), respectively. FIG 6 is a diagram showing an example of a relationship among the predicted value, the measured value, and the coefficient at each of the point (A1) on the windward side, a reference point in the prediction target area 102, and the point (A5) on the leeward side at the current time. FIG. 7 is a diagram showing an example of a relationship between the predicted value at the reference point of the prediction target area 102 at the prediction target time, and the predicted value after correction.

For example, when the prediction start condition is satisfied due to the request for the prediction of the generated power of the photovoltaic power generation device 15A at the prediction target time after a predetermined time has elapsed from the current time (YES in S100), the prediction result of the wind direction at the reference point at the prediction target time is acquired from the external server 200 (S102). Then, the point on the windward side is identified by using the prediction result of the wind direction (S104). For example, when the prediction result of the wind direction is southward, the point A1 in the north direction is identified as the point on the windward side. Further, the point on the leeward side is identified by using the prediction result of the wind direction (S106). For example, when the prediction result of the wind direction is southward, the point A5 in the south direction is identified as the point on the leeward side.

The measured value Ia(1) and the predicted value Ib(1) of the solar radiation amount at the current time of the identified point on the windward side are acquired (S108). A ratio Ca(1) (= Ia(1)/Ib(1)) of the measured value to the predicted value at the acquired point A1 is calculated as the coefficient A (see FIG. 6) (S110).

Next, the measured value Ia(0) and the predicted value Ib(0) of the solar radiation amount at the current time at the reference point of the prediction target area 102 are acquired (S 112). Then, the ratio Ca(0) (= Ia(0)/Ib(0)) of the measured value Ia(0) to the predicted value Ib(0) of the solar radiation amount at the current time of the prediction target area 102 is calculated as the coefficient B (see FIG. 6) (S114).

Further, the measured value Ia(5) and the predicted value Ib(5) of the solar radiation amount at the current time of the identified point on the leeward side are acquired (S116). The ratio Ca(5) (= Ia(5)/Ib(5)) of the measured value to the predicted value at the acquired point A5 is calculated as the coefficient C (see FIG. 6) (S118).

The correction coefficient D is calculated by using the calculated coefficients A, B, C (S120). Specifically, as described above, the correction coefficient D is calculated by the equation D = (w1 × A + w2 × B + w3 × C)/(w1 + w2 + w3). At this time, since the weighting coefficient w1 is a larger value than any of w2, w3, the weighting of the coefficient A is set to be larger than that of the coefficients B, C in the calculation of the correction coefficient D.

Then, the predicted value Ib of the solar radiation amount at the prediction target time of the prediction target area 102 is acquired (S122), and the acquired predicted value Ib is multiplied by the calculated correction coefficient D (see FIG. 7) to calculate the predicted value after correction Ib' (= Ib × D) (S124). By using the calculated predicted value after correction Ib', the generated power at the prediction target time of the prediction target area 102 is predicted (S126).

As described above, according to an aspect of the power management system 100 according to the present embodiment, when the solar radiation amount fluctuates from the initially predicted value due to the influence of clouds and the like, the weighting coefficient w1 of the coefficient A at the point on the windward side is set to a value larger than the weighting coefficients w2, w3 of the coefficients B, C at other points, so that the predicted value of the solar radiation amount in the photovoltaic power generation device 15A at the prediction target time can be corrected with high precision. Therefore, it is possible to improve the prediction precision of the generated power of the photovoltaic power generation device 15A. Therefore, it is possible to provide the power management system, the power management server, and the power management method that improve the prediction precision of the generated power of the photovoltaic power generation device.

Further, since the measured value of the solar radiation amount is acquired by using a pyranometer installed at each point, the measured value of the solar radiation amount can be acquired with high precision. Therefore, it is possible to calculate the predicted value of the solar radiation amount in the photovoltaic power generation device 15A at the prediction target time with high precision by using the measured value acquired from the external server 200 and the history of the measured value.

Hereinafter, a modification example will be described.
In the above-described embodiment, it has been described that the measured value of the solar radiation amount is detected by using a pyranometer, but instead of or in addition to the pyranometer, the measured value of the solar radiation amount may be detected by using at least any one of a camera, a raindrop sensor, and a temperature sensor. For example, the measured value of the solar radiation amount may be detected by the light amount acquired by using a camera, the amount of clouds may be predicted by the presence or absence of rainfall by a raindrop sensor, or the amount of clouds by a temperature sensor, and in a case where the amount of clouds is large, and the like based on the prediction result, change processing, such as suppressing a sudden change in the measured value of the solar radiation amount may be executed.

Further, in the above-described embodiment, the case where the direction is divided into eight directions and a point at which the measured value and the predicted value of the solar radiation amount can be acquired is set in each direction has been described as an example, but after the direction is divided into four directions (East, West, South, and North), a point at which the measured value and predicted value of the solar radiation amount can be acquired may be set in each direction, or after the direction may be subdivided into 16 or more directions, a point at which the measured value and the predicted value of the solar radiation amount can be acquired may be set in each direction.

Further, in the above-described embodiment, the case where the point on the windward side and the point on the leeward side are points outside the prediction target area 102 has been described as an example, but for example, the point on the windward side and the point on the leeward side may be points on the windward side and the leeward side with respect to the reference point of the prediction target area 102, respectively, and may be points in the prediction target area 102.

Further, in the above-described embodiment, it has been described that the CEMS server 2 acquires information on the solar radiation amount at the reference point and each of a plurality of points outside the prediction target area 102 from the external server 200, but the CEMS server 2 may directly acquire information on the solar radiation amount by using a pyranometer and the like installed at each point.

Further, in the above-described embodiment, it has been described that the correction coefficient D is calculated by using the coefficients A, B, C, and the predicted value after correction is calculated by multiplying the predicted value of the solar radiation amount in the prediction target area 102 at the prediction target time by the calculated correction coefficient D, but, for example, the predicted value after correction may be calculated by calculating the difference between the measured value and the predicted value at each point, calculating the weighted average of the calculated difference at each point as the correction amount, and adding the calculated correction amount to the predicted value of the solar radiation amount in the prediction target area 102 at the prediction target time. In this case, a value is set in which the weighting coefficient of the difference at the point on the windward side is larger than the weighting coefficient of the difference at other points.

Further, in the above-described embodiment, one point is set for each direction around the prediction target area 102, but a plurality of points may be set for each direction. In this case, the CEMS server 2 may calculate the correction coefficient D by using the average value of the measured values and the average value of the predicted values of the solar radiation amount at a plurality of points in the direction identified as the windward side or the leeward side, and may calculate the correction coefficient D by using the measured value and the predicted value of other points, which are closer to the windward side or the leeward side, among the points in the same direction.

Further, in the above-described embodiment, it has been described that the weighting coefficient for the coefficient A at the point on the windward side is set to be larger than the coefficients B, C at other points including the reference point and the point on the leeward side, but the other points are not limited to the reference point and the point on the leeward side, and, for example, may be merely the reference point or may be merely the point on the leeward side.

Further, in the above-described embodiment, it has been described that the generated power at the prediction target time is predicted by the CEMS server 2, but the generated power at the prediction target time may be predicted by a server different from the CEMS server 2, and the prediction result may be transmitted to the CEMS server 2.

Further, in the above-described embodiment, it has been described that the CEMS server 2 predicts the generated power at the prediction target time, but for example, the generated power amount during a scheduled power adjustment period may be predicted. For example, the CEMS server 2 may multiply the predicted generated power by the control cycle, integrate the scheduled power adjustment period (or a predetermined period), and predict the generated power amount during the scheduled power adjustment period.

Further, in the above-described embodiment, it has been described that the CEMS server 2 acquires the predicted value of the solar radiation amount at each point from the external server 200, but the CEMS server 2 may calculate the predicted value of the solar radiation amount at each point by using the history of the measured value of the solar radiation amount at each point. For example, the CEMS server 2 may acquire the measured value of the solar radiation amount from the pyranometer at each point (reference point and each of the points A1 to A8), and calculate the predicted value of the solar radiation amount at each point by using the history of the acquired measured value of the solar radiation amount.

Further, in the above-described embodiment, it has been described that the CEMS server 2 sets the weighting coefficient w1 of the coefficient A calculated by using the measured value and the predicted value of the solar radiation amount at the point on the windward side of the reference point, to be a value that is larger than the weighting coefficients w2, w3 of the coefficients B, C calculated by using the measured value and the predicted value of the solar radiation amount at other points and corrects the predicted value of the solar radiation amount at the reference point at the prediction target time, but at least any one of the weighting coefficients w1, w2, w3 may be a predetermined value, or may be set by using the wind speed at the reference point. Alternatively, the weighting coefficient w1 may be set by using the wind speed at the point on the windward side, the weighting coefficient w2 may be set by using the wind speed at the reference point, and the weighting coefficient w3 may be set by using the wind speed at the point on the leeward side. Alternatively, the coefficients A, B, C may be corrected by using the wind speed at the reference point, the coefficient A may be corrected by using the wind speed at the point on the windward side, the coefficient B may be corrected by using the wind speed at the reference point, and the coefficient C may be corrected by using the wind speed at the point on the leeward side.

In addition, the above-mentioned modification may be carried out by appropriately combining all or a part thereof.

It should be considered that the embodiments disclosed this time are exemplary in all respects and not restrictive. The scope of the invention is shown by the scope of claims rather than the above description, and is intended to include all modifications within the meaning and scope equivalent to the scope of claims.

## Claims

1. A power management system (100) comprising:
a photovoltaic power generation device (15A) installed in a predetermined area (102) and connected to a power grid (4) disposed in the predetermined area (102);
an acquisition device (116) configured to acquire a wind direction at a reference point at which the photovoltaic power generation device (15A) is installed in the predetermined area (102); and
an arithmetic device (2) configured to calculate a predicted value of a solar radiation amount at the reference point at a prediction target time and calculate generated power of the photovoltaic power generation device (15A) by using the predicted value,
wherein the arithmetic device (2) corrects the predicted value of the solar radiation amount at the reference point at the prediction target time by weighting first information about a solar radiation amount at a point on a windward side of the reference point before a current time larger than second information about a solar radiation amount at another point other than the reference point before the current time.

2. The power management system (100) according to claim 1, wherein the arithmetic device (2) is configured to
calculate a first correction amount by using a measured value and the predicted value of the solar radiation amount at a point on the windward side,
calculate a second correction amount by using a measured value and a predicted value of the solar radiation amount at the other point, and
calculate a correction amount to correct the predicted value of the solar radiation amount at the reference point at the prediction target time by setting a weighting coefficient of the first correction amount to be larger than the second correction amount.

3. The power management system (100) according to claim 2, wherein the measured value of the solar radiation amount is acquired by using at least any one of a pyranometer, a camera, a raindrop sensor, and a temperature sensor.

4. The power management system (100) according to claim 2 or 3, wherein the predicted value of the solar radiation amount is calculated by using a history of the measured value.

5. The power management system (100) according to any one of claims 2 to 4, wherein the arithmetic device (2) is configured to acquire at least any one of the measured value and the predicted value from an external server (200) of the power management system (100).

6. The power management system (100) according to any one of claims 1 to 5, wherein the other point other than the reference point includes a point on a leeward side of the reference point.

7. A power management server in which a photovoltaic power generation device (15A) is installed in a predetermined area (102) and connected to a power grid (4) disposed in the predetermined area (102), the power management server comprising one or more processors configured to
acquire a wind direction at a reference point at which the photovoltaic power generation device (15A) is installed in the predetermined area (102),
calculate a predicted value of a solar radiation amount at the reference point at a prediction target time and calculate a generated power of the photovoltaic power generation device (15A) by using the predicted value, and
correct the predicted value of the solar radiation amount at the reference point at the prediction target time by weighting first information about a solar radiation amount at a point on a windward side of the reference point before a current time larger than second information about a solar radiation amount at another point other than the reference point before the current time.

8. The power management server according to claim 7, wherein:
the one or more processors is configured to
calculate a first coefficient corresponding to the first information by using a predicted value and a measured value of the solar radiation amount at the point on the windward side,
calculate a second coefficient by using the predicted value and a measured value of the solar radiation amount at the reference point,
calculate a third coefficient corresponding to the second information by using a predicted value and a measured value of the solar radiation amount at the other point of the reference point,
calculate a correction coefficient by using the first coefficient, the second coefficient, and the third coefficient, and
correct the predicted value of the solar radiation amount at the reference point at the prediction target time by using the correction coefficient; and
weighting for the first coefficient is set to be larger than weighting for the second coefficient and the third coefficient.

9. A power management method of managing power of a power grid (4) installed in a predetermined area (102) in which a photovoltaic power generation device (15A) connected to the power grid (4) is installed in the predetermined area (102), the power management method comprising:
acquiring a wind direction at a reference point at which the photovoltaic power generation device (15A) is installed in the predetermined area (102);
calculating a predicted value of a solar radiation amount at the reference point at a prediction target time and calculating a generated power of the photovoltaic power generation device (15A) by using the predicted value; and
correcting the predicted value of the solar radiation amount at the reference point at the prediction target time by weighting first information about a solar radiation amount at a point on a windward side of the reference point before a current time larger than second information about a solar radiation amount at another point other than the reference point before the current time.
